(19) Europäisches Patentamt
European Patent Office
Office européen des brevets

(11) **EP 4 708 390 A1**

(12) **EUROPEAN PATENT APPLICATION**
published in accordance with Art. 153(4) EPC

(43) Date of publication:
**11.03.2026 Bulletin 2026/11**

(21) Application number: **24832522.7**

(22) Date of filing: **28.06.2024**

(51) International Patent Classification (IPC):
*H01M 4/36* (2006.01)     *H01M 4/525* (2010.01)
*H01M 4/505* (2010.01)     *H01M 4/131* (2010.01)
*H01M 10/052* (2010.01)     *H01M 4/02* (2006.01)

(52) Cooperative Patent Classification (CPC):
Y02E 60/10

(86) International application number:
**PCT/KR2024/009143**

(87) International publication number:
**WO 2025/005746 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.06.2023 KR 20230085087**

(71) Applicant: **LG Energy Solution, Ltd.**
**Seoul 07335 (KR)**

(72) Inventors:
• **KIM, Jong Woo**
**Daejeon 34122 (KR)**
• **JU, Ji Young**
**Daejeon 34122 (KR)**
• **YOO, Tae Gu**
**Daejeon 34122 (KR)**
• **YOO, Seung Su**
**Daejeon 34122 (KR)**
• **PARK, Byung Chun**
**Daejeon 34122 (KR)**
• **JO, Chi Ho**
**Daejeon 34122 (KR)**

(74) Representative: **Hoffmann Eitle**
**Patent- und Rechtsanwälte PartmbB**
**Arabellastraße 30**
**81925 München (DE)**

(54) **CATHODE ACTIVE MATERIAL, CATHODE COMPRISING SAME, AND LITHIUM SECONDARY BATTERY**

(57)    A positive electrode active material includes a lithium composite transition metal oxide in the form of a single particle composed of one single nodule and/or in the form of a pseudo-single particle, which is a composite of 30 or less nodules, and a coating layer formed on the surface of the lithium composite transition metal oxide. The coating layer contains aluminum (Al) and tungsten (W). The positive electrode active material satisfies Equation 1 below:

$$[Equation\ 1]$$

$$45 \leq X \times X' \leq 56$$

wherein, X is the content of nickel among all metals except for lithium in the lithium composite transition metal oxide(unit: mol%), and X' is the BET specific surface area of the positive electrode active material (unit: $m^2/g$).

[FIG. 1]

EP 4 708 390 A1

Description

## TECHNICAL FIELD

The present invention relates to a positive electrode active material, and a positive electrode and a lithium secondary battery including the same.

## BACKGROUND

A lithium secondary battery is generally composed of a positive electrode, a negative electrode, a separator, and an electrolyte, and the positive electrode and the negative electrode include active materials capable of intercalation and de-intercalation of lithium ions.

As a positive electrode active material of the lithium secondary battery, a lithium cobalt oxide ($LiCoO_2$), a lithium nickel oxide ($LiNiO_2$), a lithium manganese oxide ($LiMnO_2$, $LiMnO_4$, or the like), a lithium iron phosphate compound ($LiFePO_4$), and the like have been used. Among the above, the lithium cobalt oxide is advantageous in that the driving voltage is high and the capacity properties are excellent, but since the price of cobalt, which is a raw material, is high, and the supply thereof is unstable, so that it is difficult to commercially apply the lithium cobalt oxide to a large-capacity battery. The lithium nickel oxide has poor structural stability, so that it is difficult to implement sufficient lifespan properties. Meanwhile, the lithium manganese oxide has excellent stability, but has a problem in that the capacity properties thereof are poor. Therefore, in order to compensate for problems of lithium transition metal oxides including Ni, Co, or Mn alone, lithium composite transition metal oxides including two or more transition metals have been developed, and among them, a lithium nickel cobalt manganese oxide (hereinafter, simply referred to as a 'NCM-based lithium composite transition metal oxide') including Ni, Co, and Mn is widely used in the field of electric vehicle batteries.

Recently, technologies for manufacturing NMC-based lithium composite transition metal oxide in the form of single particles have been proposed. A NMC-based lithium composite transition metal oxide in the form of a single particle has a smaller contact area with an electrolyte solution compared to a typical NMC-based lithium composite transition metal oxide in the form of a secondary particle, and thus, has fewer side reactions with the electrolyte solution, and has excellent particle strength, so that there is less particle breakage when manufacturing an electrode. Therefore, when a positive electrode active material in the form of a single particle is used, there are advantages in terms of gas generation and lifespan properties.

However, a NMC-based lithium composite transition metal oxide in the form of a single particle has a relatively large size of a primary particle compared to a typical lithium composite transition metal oxide in the form of a secondary particle, and has fewer interfaces between the primary particles which serve as a diffusion path for lithium ions, resulting in a decrease in lithium mobility, and since produced at a relatively high firing temperature, a rock salt phase is formed on the surface of the particle, thereby increasing surface resistance. Therefore, the lithium composite transition metal oxide in the form of a single particle has problems of high lithium diffusion resistance, non-uniform lithium-ion movement during charging and discharging, which easily causes crystal structure deformation, which results in particle cracks, increased resistance during charging and discharging due to the particle cracks, and degraded lifespan properties.

In addition, it is known that NCM-based lithium composite transition metal oxide can achieve relatively stable performance at voltages below 4.2V, but when it exceeds 4.3V, especially 4.35V, side reactions with the electrolyte become severe and transition metal ions are eluted, which causes that battery performance deteriorates rapidly. This performance degradation becomes more severe as the temperature increases.

Accordingly, there is still a need to develop a positive electrode active material of an NCM-based lithium composite transition metal oxide in the form of a single particle that have excellent lifespan propertiesat a high voltage and high temperature.

## DISCLOSURE OF THE INVENTION

## TECHNICAL PROBLEM

The present invention is intended to solve the problem described above, and is to provide a positive electrode active material which has an excellent lifespan properties when driven at a high voltage of 4.35 V or higher by controlling the content of nickel in a lithium composite transition metal oxide in the form of a single particle or a pseudo-single particle, the BET specific surface area, and the type of coating elements contained in a coating layer applicable to the lithium composite transition metal oxide.

In addition, the present invention is to provide a positive electrode and a lithium secondary battery having improved high-temperature lifespan properties by including the positive electrode active material.

## TECHNICAL SOLUTION

In one aspect, the present invention provides a positive electrode active material including lithium composite transition metal oxide in the form of a single particle composed of one single nodule or in the form of a pseudo-single particle, which is a composite of 30 or less nodules, and a coating layer formed on the surface of the lithium composite transition metal oxide, wherein the coating layer contains aluminum (Al) and tungsten (W), and the positive electrode active material satisfies Equation 1 below:

$$[\text{Equation } 1]$$

$$45 \leq X \times X' \leq 56$$

wherein, X is the content of nickel among all metals except for lithium in lithium composite transition metal oxide (unit: mol%), and X' is the BET specific surface area of the positive electrode active material (unit: $m^2/g$).

The lithium composite transition metal oxide may have a nickel content of 50 mol% to 80 mol% among all metals except for lithium.

The positive electrode active material may have a BET specific surface area of 0.70 $m^2/g$ to 0.90 $m^2/g$.

The positive electrode active material may include the aluminum (Al) in an amount of 1000 ppm to 2000 ppm based on the total weight of the positive electrode active material.

The positive electrode active material may include the tungsten (W) in an amount of 2000 ppm to 3000 ppm based on the total weight of the positive electrode active material.

The total content of the aluminum (Al) and the tungsten (W) may be 3500 ppm to 5000 ppm based on the total weight of the positive electrode active material.

The lithium composite transition metal oxide may have a composition represented by Formula 1 below:

$$[\text{Formula } 1] \qquad Li_aNi_bCo_cM^1_dM^2_eO_2$$

wherein, $M^1$ is at least one selected from the group consisting of Mn and Al, $M^2$ is at least one selected from the group consisting of Ti, Mg, Zr, Y, Ba, Ca, Sr, W, Ta, Nb, and Mo, and $1.0 \leq a \leq 1.5$, $0.5 \leq b \leq 0.8$, $0 < c < 0.5$, $0 < d < 0.5$, and $0 \leq e \leq 0.2$.

The positive electrode active material may have a $D_{50}$ of 3.0 $\mu$m to 5.0 $\mu$m.

The positive electrode active material may have a tap density of 2.20 g/cc or greater.

The positive electrode active material may further include at least one of Zr, Y, Ti, or Sr. In this case, the positive electrode active material may further include at least one of Zr in the amount of 2000 ppm to 3000 ppm, Y in the amount of 1000 ppm to 1500 ppm, Ti in the amount of 1000 ppm to 1500 ppm, and Sr in the amount of 300 ppm to 1000 ppm based on the total weight of the positive electrode active material.

In another aspect, the present invention provides a positive electrode including the above-described positive electrode active material and a lithium secondary battery including the positive electrode.

## ADVANTAGEOUS EFFECTS

A positive electrode active material according to the present invention includes a lithium composite transition metal oxide in the form of a single particle or a pseudo-single particle, which has excellent particle strength, and thus, has less particle breakage during electrode manufacturing and charging and discharging, and the positive electrode active material has a small contact area with an electrolyte solution, which suppresses the generation of side reactions with the electrolyte solution, and thus, has less gas generation when used in a secondary battery, and is capable of implementing excellent high-temperature lifespan properties due to less deterioration in the positive electrode active material.

In addition, the positive electrode active material according to the present invention may be stably driven at a high voltage of 4.35 V or higher by including Al and W in a coating layer and satisfying a specific relationship between the content of nickel in a lithium composite transition metal oxide and the BET specific surface area.

## BRIEF DESCRIPTION OF THE DRAWINGS

FIGS. 1 to 6 are SEM images of surfaces of the positive electrode active materials prepared in Examples 1 to 6, respectively.

FIGS. 7 to 13 are SEM images of surfaces of the positive electrode active materials prepared in Comparative Examples 1 to 7, respectively.

## BEST MDOE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, a "single particle" is a particle composed of one single nodule. In the present invention, a "pseudo-single particle" refers to a composite particle formed of 40 or fewer nodules.

In the present invention, a "nodule" refers to a particle unit body constituting a single particle and a pseudo-single particle, wherein the nodule may be a single crystal with no crystalline grain boundaries, or may be a polycrystal with no grain boundaries in appearance when observed in a range of vision of 5,000 to 20,000 times using a scanning electron microscope (SEM). The average particle diameter of the nodule may be measured as an arithmetic average value of particle diameters of each nodule measured using a scanning electron microscope (SEM).

In the present invention, a "secondary particle" refers to a particle formed by the agglomeration of a plurality of tens to hundreds of primary particles. More specifically, the secondary particle is an agglomerate of more than 40 primary particles.

The term "particle" used in the present invention may include any one or all of a single particle, a pseudo-single particle, a primary particle, a nodule, and a secondary particle.

In the present invention, "$D_{50}$" refers to a particle size based on 50% of a volume cumulative particle size distribution of positive electrode active material. The $D_{50}$ may be measured by a laser diffraction method. For example, the average particle diameter ($D_{50}$) may be measured by dispersing positive electrode active material powder in a dispersion medium, and then introducing the mixture into a commercially available laser diffraction particle size measurement device (e.g., Microtrac MT 3000) to be irradiated with an ultrasonic wave of about 28 kHz at an output of 60W, thereby obtaining a volume cumulative particle size distribution graph, and then obtaining a particle size corresponding to 50% of a volume cumulative amount.

In the present invention, the "specific surface area" is measured by a BET method, and specifically, may be calculated from the adsorption amount of nitrogen gas under a liquid nitrogen temperature (77K) using Belsorp-mino II of BEL Japan Co.

## Positive electrode active material

Hereinafter, a positive electrode active material according to the present invention will be described.

As a result of continuous research, the inventors of the present invention have found that forming a coating layer containing Al and W on the surface of a lithium composite transition metal oxide in the form of a single particle or pseudo-single particle, and preparing the positive electrode active material so that the BET specific surface area satisfies specific ranges depending on the nickel content of the lithium composite transition metal oxide, significantly improves the lifespan characteristics of battery under high voltage and/or high temperature conditions and hereby complete the present invention.

Specifically, the positive electrode active material according to the present invention includes (1) a plurality of lithium composite transition metal oxide in the form of a single particle and/or a pseudo-single particle, and (2) a coating layer formed on the surface of the lithium composite transition metal oxide containing aluminum (Al) and tungsten (W), wherein the positive electrode active material satisfies Equation 1 below:

$$[Equation\ 1]$$

$$45 \leq X \times X' \leq 56$$

wherein, X is the content of nickel among all metals except for lithium in the lithium composite transition metal oxide (unit: mol%), and X' is the BET specific surface area of the positive electrode active material (unit: m²/g).

According to the inventors' research, when the coating layer includes Al and W together, life characteristics under the high-voltage/high-temperature are significantly improved compared to when Al and W are coated alone, or when other elements such as B, Co, etc. are coated.

When the product of the ratio of nickel among metals except for lithium in the lithium composite transition metal oxide (X) and the BET specific surface area (X') (i.e., the value of $X \times X'$) satisfies 45 to 56, life characteristics under the high-voltage/high-temperature are improved, while when the value of $X \times X'$ is less than 45 or exceeds 56, the life characteristics are significantly degraded under high-voltage conditions of 4.35 V or higher. Specifically, when the value of $X \times X'$ is less than 45, the BET specific surface area of the positive electrode active material is small because the coating material diffuses inside the particles and the coating layer is not properly formed on the surface of the lithium composite transition metal oxide, or the nickel molar ratio is less than 50 mol%. When the nickel content is less than 50 mol%, the capacity characteristics are degraded and it is difficult to realize the desired battery properties. When the BET specific surface area is small, the contact between the surface of the lithium composite transition metal oxide and the electrolyte solution is not effectively blocked, resulting in an increase in electrolyte solution side reactions and a decrease in life characteristics.

On the other hand, when the value of $X \times X'$ is greater than 56, the content of nickel and/or the BET specific surface area is relatively high. When the content of nickel in lithium composite transition metal oxide is high, the highly reactive $Ni^{4+}$ ions increase, resulting in a decrease in the structural stability of the positive electrode active material. When the BET specific surface area is high, the surface friction force between the positive electrode active material particles increases, resulting in an increase in particle breakage during rolling. If the structural stability of the positive electrode active material is reduced, the positive electrode degradation occurs rapidly at high temperature and high voltage, resulting in a sharp decrease in the life characteristics of the lithium secondary battery at high temperature and high voltage. In addition, if the particle breakage caused by rolling increases, the life characteristics of lithium secondary batteries are rapidly degraded due to the side reaction of fine particles generated by particle breakage with the electrolyte solution.

Meanwhile, the BET specific surface area of the positive electrode active material may vary depending on the shape and/or distribution of the coating layer. For example, if the coating layer is formed in the form of a continuous film, the BET specific surface area is relatively small because the surface of the positive electrode active material is formed smoothly, while if the coating layer is formed in the form of discontinuous and sporadic particles (island shape), the BET specific surface area is relatively large. Also, even if the coating layer is formed in particle shape, the BET specific surface area may vary depending on the size of each coating particle or the area of the coating layer distribution. For example, even if the coating amount is the same, the BET specific surface area may be different when the coating particles have a small particle diameter and a large coating area and when the coating particles have a large particle diameter and a small coating area.

On the other hand, the shape and/or distribution of the coating layer can be adjusted according to the type of coating raw material, the particle size of the coating raw material, the amount of coating raw material, the heat treatment temperature during the coating, and the like. Thus, the BET specific surface area of the positive electrode active material can be controlled to a desired range by appropriately adjusting the type and/or amount of coating raw material, and/or the heat treatment temperature during the formation of the coating layer.

Next, the components of the positive electrode active material according to the present invention will be described in more detail.

### (1) Lithium composite transition metal oxide

The lithium composite transition metal oxide is in the form of a single particle composed of one single nodule and/or in the form of a pseudo-single particle, which is a composite of 40 or fewer nodules, preferably 2 to 30 nodules, and more preferably 2 to 20 nodules. The lithium composite transition metal oxide in the form of a single particle and/or a pseudo-single particle has higher particle strength than a typical lithium composite transition metal oxide in the form of a secondary particle in which tens to hundreds of primary particles are number of aggregated, and thus, there is less particle breakage during roll-pressing.

In addition, the lithium composite transition metal oxide in the form of a single particle or a pseudo-single particle according to the present invention has a small number of sub-components (i.e., nodules) constituting a particle, so that there is less change in size caused by volume expansion and contraction of primary particles during charging and discharging, and accordingly, the occurrence of cracks inside the particle is significantly reduced.

Meanwhile, the lithium composite transition metal oxide may have a composition in which the content of nickel among all metals except for lithium is 50 mol% to 80 mol%, preferably 50 mol% to 75 mol%, and more preferably, 55 mol% to 75 mol% or 55 mol% to 70 mol%.

When the nickel content exceeds 80 mol%, the lifetime characteristics may deteriorate rapidly at high voltages above 4.35V despite the formation of a coating layer, and when the nickel content is less than 50 mol%, it is difficult to realize the desired electrochemical properties due to poor capacity.

More specifically, the lithium composite transition metal oxide may have a composition represented by [Formula 1] below:

[Formula 1]      $Li_a Ni_b Co_c M^1_d M^2_e O_2$

In Formula 1 above, $M^1$ is at least one selected from the group consisting of Mn and Al, preferably Mn or a combination of Mn and Al, and $M^2$ is at least one selected from the group consisting of Ti, Mg, Zr, Y, Ba, Ca, Sr, W, Ta, Nb, and Mo. $M^2$ element is not necessarily included, but when included in an appropriate amount, $M^2$ element may serve to promote particle growth during firing or improve crystal structure stability.

a represents the molar ratio of lithium in the lithium composite transition metal oxide, and may satisfy $1.0 \leq a \leq 1.5$, $1.0 \leq a < 1.5$, or $1.0 \leq a \leq 1.2$. When the molar ratio of lithium satisfies the above-described range, a stable layered crystal structure may be formed.

b represents the molar ratio of nickel among all metals except for lithium in the lithium composite transition metal oxide, and may satisfy $0.5 \leq b \leq 0.8$, $0.50 \leq b \leq 0.75$, $0.55 \leq b \leq 0.75$, or $0.55 \leq b \leq 0.70$. As the content of nickel among the transition metals increases, a higher capacity may be implemented, so that it is more advantageous in implementing a high capacity when the nickel content is 0.5 or greater. However, the higher the nickel content, the lower the thermal stability of the positive electrode active material, and there are problems such as elution of a transition metal due to the contact with an electrolyte solution. Therefore, when the nickel content is controlled to 0.5 to 0.8 and a coating layer is included on the surface of a lithium composite transition metal oxide as in the present invention, the coating layer effectively blocks the an electrolyte solution and a positive electrode active material, so that excellent stability may be achieved even in the positive electrode active material.

c represents the molar ratio of cobalt among all metals except for lithium in the lithium composite transition metal oxide, and may satisfy $0 < c < 0.5$, $0.01 \leq c < 0.5$, $0.01 \leq c \leq 0.4$, or $0.05 \leq c \leq 0.4$. When the molar ratio of cobalt satisfies the above range, good resistance properties and output properties may be implemented.

d represents the molar ratio of the $M^1$ among all metals except for lithium in the lithium composite transition metal oxide, and may satisfy $0 < d < 0.5$, $0.01 \leq d \leq 0.5$, $0.01 \leq d \leq 0.4$, or $0.05 \leq d \leq 0.4$. When the molar ratio of the $M^1$ satisfies the above range, the positive electrode active material may exhibit excellent structural stability.

e represents the molar ratio of an $M^2$ element among all metals except for lithium in the lithium composite transition metal oxide, and may satisfy $0 \leq e \leq 0.2$, $0 \leq e \leq 0.15$, or $0 \leq e \leq 0.1$. If the $M^2$ is included in an appropriate amount, $M^2$ may serve to promote particle growth during firing, or improve crystal structure stability.


**(2) Coating layer**

The positive electrode active material according to the present invention includes a coating layer formed on the surface of the lithium composite transition metal oxide in the form of a single particle or a pseudo-single particle.

The coating layer may include aluminum (Al) and tungsten (W) as coating elements. If the coating layer contains aluminum (Al) and tungsten (W), excellent high-temperature/high-voltage lifespan properties may be implemented compared to a case in which the coating layer includes Al or W, respectively, or a case in which the coating layer includes other element such as Co, B, etc.

The aluminum (Al) may be included in an amount of 1000 ppm to 2000 ppm based on the total weight of the positive electrode active material. The aluminum (Al) may preferably be included in an amount of 1200 ppm to 2000 ppm, more preferably 1300 ppm to 1600 ppm based on the total weight of the positive electrode active material.

The tungsten (W) may preferably be included in an amount of 2000 ppm to 3000 ppm based on the total weight of the positive electrode active material. The tungsten (W) may preferably be included in an amount of 2200 ppm to 3000 ppm, more preferably 2500 ppm to 3000 ppm, based on the total weight of the positive electrode active material.

The total content of aluminum and tungsten may be 3500 ppm to 5000 ppm, preferably 3500 ppm to 4500 ppm, more preferably 4000 ppm to 4500 ppm, based on the total weight of the positive electrode active material.

If the content of the aluminum (Al) and tungsten (W) satisfies the above-described numerical ranges, the BET of the positive electrode active material can be adjusted to an appropriate range, and the high temperature/high voltage life characteristics can be improved while minimizing the deterioration of properties such as resistance or capacity.

The positive electrode active material according to the present invention may have a BET specific surface area of $0.70\ m^2/g$ to $0.90\ m^2/g$, preferably $0.72\ m^2/g$ to $0.89\ m^2/g$, and more preferably $0.75\ m^2/g$ to $0.88\ m^2/g$. If the BET specific surface area of the positive electrode active material is less than $0.70\ m^2/g$, it is difficult to implement sufficient capacity due to an insufficient reaction area with an electrolyte, and if greater than $0.90\ m^2/g$, adhesion is lowered during electrode manufacturing or side reactions with the electrolyte are accelerated during electrode driving, so that there is a problem in that it is difficult to secure lifespan properties.

The positive electrode active material may further include at least one of Zr, Y, Ti, or Sr. When the above elements are included, the structural stability of the positive electrode active material can be improved, and the lifetime characteristics can be further improved.

One or more of the elements of Zr, Y, Ti or Sr may be doped in the crystal structure of the lithium composite transition metal oxide, or may be coated on the lithium composite transition metal oxide.

When the positive electrode active material further comprises Zr, Zr may be included in an amount of 2000 ppm to 3000 ppm, preferably 2200 ppm to 2800 ppm, and more preferably 2300 ppm to 2700 ppm based on the total weight of the positive electrode active material.

When the positive electrode active material further comprises Y, Y may be included in an amount of 1000 ppm to 1500 ppm, preferably 1000 ppm to 1400 ppm, and more preferably 1100 ppm to 1350 ppm based on the total weight of the positive electrode active material.

When the positive electrode active material further comprises Ti, Ti may be included in an amount of 1000 ppm to 1500 ppm, preferably 1000 ppm to 1400 ppm, and more preferably 1100 ppm to 1350 ppm based on the total weight of the positive electrode active material.

When the positive electrode active material further comprises Sr, Sr may be included in an amount of 300 ppm to 1000 ppm, preferably 400 ppm to 900 ppm, and more preferably 500 ppm to 800 ppm based on the total weight of the positive electrode active material.

If the content of the Zr, Y, Ti, or Sr satisfies the above-described numerical ranges, the structural stability of the positive electrode active material can be effectively improved while minimizing the degradation of properties such as capacity, resistance, etc. of the positive electrode active material, thereby further improving stability at high voltage and/or high temperature.

Meanwhile, the positive electrode active material according to the present invention may have a $D_{50}$ of 3.0 $\mu$m to 5.0 $\mu$m, preferably 3.5 $\mu$m to 4.5 $\mu$m, and more preferably 3.5 $\mu$m to 4.0 $\mu$m. If the $D_{50}$ of the positive electrode active material is less than 3.0 $\mu$m, it is difficult to form an active material layer when manufacturing an electrode, and electrolyte solution wettability is lowered, thereby degrading electrochemical properties, and if the $D_{50}$ is greater than 5.0 $\mu$m, there are problems in that lithium mobility decreases, thereby increasing resistance, and output properties are degraded.

Meanwhile, the positive electrode active material according to the present invention may have a tap density 2.20 g/cc or greater, preferably 2.20 g/cc to 2.50 g/cc, and more preferably 2.20 g/cc to 2.30 g/cc. If the tap density of the positive electrode active material satisfies the above-described numerical ranges, the rolling properties are good, so that it is possible to implement improved lifespan of a lithium secondary battery.

The positive electrode active material may be prepared by mixing a lithium composite transition metal oxide in form of single-particle or pseudo-singleparticle with an Al source material and a W source material, and then heat treating to form a coating layer including Al and W.

In this case, the lithium composite transition metal oxide in form of single-particle or pseudo-single-particle is the same as described above.

As the Al source material, an Al-containing oxide, halide, sulfur oxide, nitric oxide, or the like may be used, for example, $Al_2O_3$ may be used, but is not limited thereto.

As the W source material, a W-containing oxide, hydroxide, halide, sulfur oxide, nitric oxide, or the like may be used, for example, $WO_3$ may be used, but is not limited thereto.

The Al source material may be mixed in an amount such that the Al is 0.1 mole to 1 mole, preferably 0.3 mole to 0.8 mole, more preferably 0.4 mole to 0.6 mole, per 100 mole of lithium composite transition metal oxide.

Further, the W source material may be mixed in an amount such that the W is 0.1 mole to 0.5 mole, preferably 0.1 mole to 0.3 mole, more preferably 0.1 mole to 0.2 moleper 100 moles of lithium composite transition metal oxide.

When the mixing ratio of the Al source material and the W source material satisfies the above range, a coating layer is formed on the surface of the lithium transition metal oxide in an appropriate shape and distribution, so that a positive electrode active material satisfying Formula (1) may be prepared.

Meanwhile, the heat treatment for forming the coating layer may be carried out at a temperature of 375°C to 550°C, preferably 375°C to 500°C, for 3 hours to 10 hours, preferably 4 hours to 6 hours. When the heat treatment temperature and time for forming the coating layer satisfy the above range, a coating layer is formed on the surface of the lithium transition metal oxide in an appropriate shape and distribution, so that a positive electrode active material satisfying Formula (1) may be prepared.

Meanwhile, if necessary, a raw material containing at least one of Zr, Y, Ti, and Sr may be further mixed with the Al raw material and the W raw material during formation of the coating layer. In this case, the raw material containing at least of Zr, Y, Ti, and Sr may be an oxide, hydroxide, halide, sulfur oxide, nitric oxide, or the like including one or more elements of Zr, Y, Ti, and Sr, but is not limited thereto.

When the Zr-containing raw material is further mixed, the Zr-containing raw material may be mixed in an amount such that a content of Zr is from 2000 ppm to 3000 ppm, preferably from 2200 ppm to 2800 ppm, more preferably from 2300 ppm to 2700 ppm, based on the total weight of the positive electrode active material.

When the Y-containing raw material is further mixed, the Y-containing raw material may be mixed in an amount such that a content of Y is from 1000 ppm to 1500 ppm, preferably from 1000 ppm to 1400 ppm, more preferably from 1100 ppm to 1350 ppm, based on the total weight of the positive electrode active material.

When the Ti-containing raw material is further mixed, the Ti-containing raw material may be mixed in an amount such that a content of Ti is from 1000 ppm to 1500 ppm, preferably from 1000 ppm to 1400 ppm, more preferably from 1100 ppm to 1350 ppm, based on the total weight of the positive electrode active material.

When the Sr-containing raw material is further mixed, the Sr-containing raw material may be mixed in an amount such that a content of Sr is from 300 ppm to 1000 ppm, preferably from 400 ppm to 900 ppm, more preferably from 500 ppm to 800 ppm, based on the total weight of the positive electrode active material.

## Positive electrode

A positive electrode according to the present invention includes the above-described positive electrode active material of the present invention. Specifically, the positive electrode includes a positive electrode current collector, and a positive electrode active material layer formed on the positive electrode current collector, wherein the positive electrode active material layer includes the positive electrode active material according to the present invention. Since the positive electrode active material has been described above, a detailed description thereof will be omitted, and hereinafter, only the rest of the components will be described in detail.

The positive electrode current collector may include a metal having a high conductivity, and is not particularly limited as long as the positive electrode current collector is not reactive in the voltage range of a battery while a positive electrode active material layer is able to be easily adhered thereto. As the positive electrode current collector, for example, stainless steel, aluminum, nickel, titanium, heat treatment carbon, or aluminum or stainless steel that is surface-treated with one of carbon, nickel, titanium, silver, orthe like may be used. Also, the positive electrode current collector may typically have a thickness of 3 $\mu$m to 500 $\mu$m, and microscopic irregularities may be formed on the surface of the current collector to improve the adhesion of the positive electrode active material. For example, the positive electrode current collector may be used in various forms such as a film, a sheet, a foil, a net, a porous body, a foam, a non-woven body, and the like.

The positive electrode active material layer may selectively include, if necessary, a conductive material and a binder together with the positive electrode active material.

At this time, the positive electrode active material may be included in a content of 80 wt% to 99 wt%, more specifically 90 wt% to 98 wt% with respect to the total weight of the positive electrode active material layer.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive tube such as a carbon nanotube; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.01 wt% to 10 wt%, preferably 0.1 wt% to 9 wt%, and more preferably 0.1 wt% to 5 wt% based on the total weight of a positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethymethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, a poly acrylic acid, a polymer having the hydrogen thereof substituted with Li, Na, or Ca, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of a positive electrode active material layer.

The positive electrode may be manufactured according to a typical method for manufacturing a positive electrode except that the positive electrode active material described above is used. Specifically, the positive electrode may be manufactured by applying a positive electrode slurry composition, which is prepared by dissolving or dispersing the positive electrode active material described above and selectively, if necessary, a binder, a conductive material, and a dispersant in a solvent, on a positive electrode current collector, followed by drying and roll-pressing.

The solvent may be a solvent commonly used in the art, and may be dimethyl sulfoxide (DMSO), isopropyl alcohol, N-methylpyrrolidone (NMP), acetone, water, or the like, and any one thereof or a mixture of two or more thereof may be used. The usage amount of the solvent is sufficient if the solvent dissolves or disperses the positive electrode active material, the conductive material, the binder, and the dispersant in consideration of the coating thickness of a slurry, and a manufacturing yield, and thereafter, allows the slurry to have a viscosity capable of exhibiting excellent thickness uniformity when applied for manufacturing the positive electrode.

In addition, in another method, the positive electrode may also be manufactured by casting the positive electrode slurry composition on a separate support, and then laminating a film obtained by being peeled off from the support on a positive electrode current collector.

## Lithium secondary battery

Next, a lithium secondary battery according to the present invention will be described.

Specifically, the lithium secondary battery may includea positive electrode, a negative electrode positioned to face the positive electrode, a separator interposed between the positive electrode and the negative electrode, and an electrolyte. In another aspect, a separator may not included depending on the battery type. For example, the lithium secondary battery may include a positive electrode, a negative electrode positioned to face the positive electrode, and a solid-electrolyte interposed between the positive electrode and the negative electrode.

Since the positive electrode is the same as that described above, a detailed description thereof will be omitted, and hereinafter, only the rest of the components will be described in detail.

Also, the lithium secondary battery may selectively further include a battery case for accommodating an electrode assembly of the positive electrode, the negative electrode, and the separator, and a sealing member for sealing the battery case.

In another aspect, the lithium secondary battery may selectively further include a battery case for accommodating an electrode assembly of the positive electrode, the negative electrode, and the solid electrolyte, and a sealing member for sealing the battery case.

In the lithium secondary battery, the negative electrode includes a negative electrode current collector and a negative electrode active material layer positioned on the negative electrode current collector.

The negative electrode current collector is not particularly limited as long as it has high conductivity without causing a chemical change in a battery, and for example, copper, stainless steel, aluminum, nickel, titanium, heat-treated carbon, copper or stainless steel that is surface-treated with one of carbon, nickel, titanium, silver, and the like, an aluminum-cadmium alloy, and the like may be used. Also, the negative electrode current collector may typically have a thickness of 3 $\mu$m to 500 $\mu$m, and as in the case of the positive electrode current collector, microscopic irregularities may be formed on the surface of the current collector to improve the adhesion of a negative electrode active material. For example, the negative electrode current collector may be used in various forms such as a film, a sheet, a foil, a net, a porous body, a foam, and a non-woven body.

The negative electrode active material layer selectively includes a binder and a conductive material in addition to a negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic material alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as $SiO\beta(0 < \beta < 2)$, $SnO_2$, a vanadium oxide, and a lithium vanadium oxide; or a composite including the metallic material and the carbonaceous material such as an Si-C composite or an Sn-C composite, and any one thereof or a mixture of two or more thereof may be used. Also, a metal lithium thin film may be used as the negative electrode active material. In addition, low crystalline carbon, high crystalline carbon, and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, meso-carbon microbeads, mesophase pitches, and high-temperature heat-treated carbon such as petroleum or coal tar pitch derived cokes.

The negative electrode active material may be included in an amount of 80 wt% to 99 wt%, 82 wt% to 99 wt%, or 84 wt% to 99 wt% based on the total weight of the negative electrode active material layer.

The binder is a component for assisting in bonding between a conductive material, an active material, and a current collector, and is typically added in an amount of 0.1 wt% to 10 wt% based on the total weight of a negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

The conductive material is a component for further improving the conductivity of a negative electrode active material, and may be included in an amount of 1 wt% to 30 wt%, 1 wt% to 20 wt%, or 1 wt% to 10 wt% based on the total weight of the negative electrode active material layer. The conductive material is not particularly limited as long as it has conductivity without causing a chemical change in the battery. For example, graphite such as natural graphite or artificial graphite; carbon black such as acetylene black, Ketjen black, channel black, furnace black, lamp black, and thermal black; conductive fiber such as carbon fiber and metal fiber; fluorocarbon powder; metal powder such as aluminum powder, and nickel powder; a conductive whisker such as zinc oxide and potassium titanate; a conductive metal oxide such as titanium oxide; a conductive material such as a polyphenylene derivative, or the like may be used.

The negative electrode active material layer may be prepared by applying a negative electrode slurry composition, which is prepared by dissolving or dispersing a negative electrode active material and selectively, a binder and a conductive material in a solvent, on a negative electrode current collector, followed by drying, or may be prepared by casting the negative electrode slurry composition on a separate support, and then laminating a film peeled off from the support on a negative electrode current collector.

Meanwhile, in the above-described lithium secondary battery, the separator is to physically separate the negative electrode and the positive electrode and to provide a movement path for lithium ions, and any separator typically used as a separator in a lithium secondary battery may be used without particular limitation, and in particular, a separator having high moisture-retention capability for an electrolyte while having low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, or an ethylene/methacrylate copolymer, or a stacked structural body having two or more layers thereof may be used. Also, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may selectively be used in a single-layered or multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, or the like, all of which may be used in the manufacturing of a lithium secondary battery, but the electrolyte is not limited thereto.

Specifically, the electrolyte may include an organic solvent and a lithium salt.

As the organic solvent, any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC); an alcohol-based solvent such as ethyl alcohol or isopropyl alcohol; nitriles such as R-CN (wherein R is a linear, branched, or cyclic hydrocarbon group having 2 to 20 carbon atoms, and may include a double-bond aromatic ring or an ether bond); amides such as dimethylformamide; dioxolanes such as 1,3-dioxolane; sulfolanes, or the like may be used. Among the above, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

Any compound may be used as the lithium salt without particular limitation as long as it is a compound capable of providing lithium ions used in a lithium secondary battery. Specifically, anions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$ $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. The lithium salt may be used in a concentration range of 0.1 M to 4.0 M, preferably 0.5 M to 3.0 M, and more preferably 1.0 M to 2.0 M. When the concentration of the lithium salt is in the above range, the electrolyte has suitable conductivity and viscosity, thereby exhibiting excellent performance, and lithium ions may effectively move.

In order to improve lifespan properties of a battery, suppress a decrease in battery capacity, improve discharge capacity of the battery, and the like, the electrolyte may further include one or more kinds of additives, for example, a halo-alkylene carbonate-based compound such as difluoroethylene carbonate, pyridine, triethylphosphite, triethanolamine, cyclic ether, ethylenediamine, n-glyme, hexamethylphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like. At this time, the additive may be included in an amount of 0.1 wt% to 10.0 wt% based on the total weight of the electrolyte.

As the inorganic solid electrolyte, for example, nitrides, halides, sulfides, sulfates and the like of Li such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH or $Li_3PO_4$-$Li_2S$-$SiS_2$ may be used.

The lithium secondary battery according to the present invention as described above has excellent stability and electrochemical performance even at a high voltage, and thus, may have a charging termination voltage of greater than 4.35V when driven, and when driven at such a high voltage, the lithium secondary battery may implement excellent high-capacity properties compared to a typical lithium secondary battery. The lithium secondary battery according to the present invention may have a driving voltage of 2.0 V to 4.45 V, more preferably 2.0 V to 4.40 V.

The lithium secondary battery may be divided into various batteries such as a lithium ion battery, a lithium-sulfur battery, a lithium-air battery, a lithium-oxide battery or a lithium all-solid-state battery, and depending on the shape, may be divided into a cylinder-type, a square-type, a coin-type, a pouch-type and the like, and depending on the size, may be divided into a bulk type and a thin film type. Structures and manufacturing methods of these batteries are widely known in the art, and therefore, detailed descriptions thereon are not included.

In addition, the lithium secondary battery according to the present invention stably exhibits excellent discharge capacity, output properties, and capacity retention rate stably, and thus, is useful for portable devices such as mobile phones, laptop computers, and digital cameras, and in the field of electric vehicles such as hybrid electric vehicles (HEVs).

Accordingly, according to another embodiment of the present invention, a battery module including the lithium secondary battery as a unit cell, and a battery pack including the battery module are provided.

According to another embodiment of the present invention, a battery pack including a plurality of the lithium secondary batteries according to the present invention as unit cells are also provided. The battery pack may not include any battery modules.

The present invention also relates to a cell-to-pack assembly.

According to an embodiment, a battery module may contain about 10 to about 50 unit cells, preferably about 16 to about 36 unit cells. A battery back may contain about 10 to 1,000 unit cells, preferably from about 10 to 500 unit cells.

The battery module or the battery pack may be used as a power source for one or more medium-to-large devices of a power tool, an electric car including an electric vehicle (EV), a hybrid electric vehicle, and a plug-in hybrid electric vehicle (PHEV), or a system for power storage.

Hereinafter, embodiments of the present invention will be described in detail so that those skilled in the art may easily carry out the present invention. However, the present invention may be embodied in many different forms, and is not limited to the embodiments set forth herein.

## Examples and Comparative Examples

### Example 1

A lithium composite transition metal hydroxide precursor having a molar ratio of Ni : Co : Mn of 0.6 : 0.1 : 0.3 and a lithium raw material (LiOH) were mixed such that the molar ratio of the transition metal (Ni+Co+Mn) : Li was 1 : 1.03, and then the mixture was fired at 950 °C for 14 hours to prepare $LiNi_{0.6}Co_{0.1}Mn_{0.3}O_2$ in the form of a single particle.

Thereafter, the fired product was mixed with $Al_2O_3$ and $WO_3$ such that the molar ratio of the fired product : Al : W was 100 : 0.5 : 0.15, and then the mixture was heat-treated at 500 °C for 5 hours to prepare positive electrode active material powder having aluminum and tungsten coating layers formed thereon.

### Example 2

Positive electrode active material powder was prepared in the same manner as in Example 1, except that the mixture was heat-treated at 450 °C for 5 hours after the fired product was mixed with $Al_2O_3$ and $WO_3$.

### Example 3

Positive electrode active material powder was prepared in the same manner as in Example 1, except that the mixture was heat-treated at 400 °C for 5 hours after the fired product was mixed with $Al_2O_3$ and $WO_3$.

### Example 4

Positive electrode active material powder was prepared in the same manner as in Example 1, except that the mixture was heat-treated at 375 °C for 5 hours after the fired product was mixed with $Al_2O_3$ and $WO_3$.

### Example 5

A lithium composite transition metal hydroxide precursor having a molar ratio of Ni : Co : Mn of 0.65 : 0.10 : 0.25 and a lithium raw material (LiOH) were mixed such that the molar ratio of the transition metal (Ni+Co+Mn) : Li was 1.0 : 1.03, and then the mixture was fired at 930 °C for 14 hours to prepare $LiNi_{0.65}Co_{0.10}Mn_{0.25}O_2$ in the form of a single particle.

Thereafter, the fired product was mixed with $Al_2O_3$ and $WO_3$ such that the molar ratio of the fired product : Al : W was 100 : 0.5 : 0.15, and then the mixture was heat-treated at 500 °C for 5 hours to prepare positive electrode active material powder having aluminum and tungsten coating layers formed thereon.

### Example 6

A lithium composite transition metal hydroxide precursor having a molar ratio of Ni : Co : Mn of 0.7 : 0.1 : 0.2 and a lithium raw material (LiOH) were mixed such that the molar ratio of the transition metal (Ni+Co+Mn) : Li was 1.0 : 1.03, and then the mixture was fired at 910 °C for 14 hours to prepare $LiNi_{0.7}Co_{0.1}Mn_{0.2}O_2$ in the form of a single particle.

Thereafter, the fired product was mixed with $Al_2O_3$ and $WO_3$ such that the molar ratio of the fired product: Al : W was 100 : 0.5 : 0.15, and then the mixture was heat-treated at 500 °C for 5 hours to prepare positive electrode active material powder having aluminum and tungsten coating layers formed thereon.

## Comparative Example 1

Positive electrode active material powder was prepared in the same manner as in Example 1, except that $Al(OH)_3$ was used instead of $Al_2O_3$ to form a coating layer.

## Comparative Example 2

Positive electrode active material powder was prepared in the same manner as in Example 1, except that the fired product was mixed with $Al(OH)_3$ and $WO_3$ such that the molar ratio of the fired product: Al : W was 100 : 0.5: 0.15, and then the mixture was heat-treated at 425 °C for 5 hours to form a coating layer.

## Comparative Example 3

Positive electrode active material powder was prepared in the same manner as in Example 1, except that the fired product was mixed with $Al(OH)_3$ and $WO_3$ such that the molar ratio of the fired product: Al : W was 100 : 0.5: 0.15, and then the mixture was heat-treated at 400 °C for 5 hours to form a coating layer.

## Comparative Example 4

Positive electrode active material powder was prepared in the same manner as in Example 1, except that the fired product was mixed with $Al_2O_3$ and $WO_3$ such that the molar ratio of the fired product : Al : W was 100 : 0.4: 0.12, and then the mixture was heat-treated at 400 °C for 5 hours to form a coating layer.

## Comparative Example 5

Positive electrode active material powder was prepared in the same manner as in Example 1, except that the fired product was mixed with $Al_2O_3$ and $WO_3$ such that the molar ratio of the fired product : Al : W was to be 100 : 0.5 : 0.15, and then the mixture was heat-treated at 370 °C for 5 hours to form a coating layer.

## Comparative Example 6

A lithium composite transition metal hydroxide precursor having a molar ratio of Ni : Co : Mn of 0.86 : 0.08 : 0.06 and a lithium raw material (LiOH) were mixed such that the molar ratio of the transition metal (Ni+Co+Mn) : Li was 1.0 : 1.03, and then the mixture was fired at 860 °C for 20 hours to prepare $LiNi_{0.86}Co_{0.8}Mn_{0.6}O_2$ in the form of a single particle.

Thereafter, the fired product was mixed with $Al_2O_3$ and $WO_3$ such that the molar ratio of the fired product : Al : W was 100 : 0.5: 0.15, and then the mixture was heat-treated at 450 °C for 5 hours to prepare positive electrode active material powder having aluminum and tungsten coating layers formed thereon.

## Comparative Example 7

A lithium composite transition metal hydroxide precursor having a molar ratio of Ni : Co : Mn of 0.6 : 0.1 : 0.3 and a lithium raw material (LiOH) were mixed such that the molar ratio of the transition metal (Ni+Co+Mn) : Li was 1.0 : 1.03, and then the mixture was fired at 870 °C for 20 hours to prepare $LiNi_{0.6}Co_{0.1}Mn_{0.3}O_2$ in the form of a secondary particle.

Thereafter, the fired product was mixed with $Al_2O_3$ and $WO_3$ such that the molar ratio of the fired product : Al : W was to be 100 : 0.5: 0.15, and then the mixture was heat-treated at 450 °C for 5 hours to prepare positive electrode active material powder having aluminum and tungsten coating layers formed thereon.

## Comparative Example 8

When forming coating layer, the fired product was mixed with $WO_3$ such that the molar ratio of the fired product : W was 100 : 0.2, and then the mixture was heat-treated at 450 °C for 5 hours to prepare positive electrode active material powder having W coating layer formed thereon.

### Comparative Example 9

When forming coating layer, the fired product was mixed with Al(OH)$_3$ such that the molar ratio of the fired product : Al was 100 : 0.5, and then the mixture was heat-treated at 450 °C for 5 hours to prepare positive electrode active material powder havinga Al-coating layerformed thereon.

### Comparative Example 10

When forming coating layer, the fired product was mixed with boric acid such that the molar ratio of the fired product : B was 100 : 0.5, and then the mixture was heat-treated at 300 °C for 5 hours to prepare positive electrode active material powder having a B-coating layer formed thereon.

### Comparative Example 11

When forming coating layer, the fired product was mixed with Co(OH)$_3$ such that the molar ratio of the fired product : Co was 100 : 0.5, and then the mixture was heat-treated at 700 °C for 5 hours to prepare positive electrode active material powder having a Co-coating layer formed thereon.

### Experimental Example 1

The BET specific surface area and coating element (Al and W) content of the positive electrode active material powder prepared in each of Examples 1 to 6 and Comparative Examples 1 to 7were measured.

The BET specific surface area was measured by a BET method using a BELSORP-mini after collecting 3.5 g of the positive electrode active material powder, and the content of aluminum (Al) and tungsten (W), which were coating elements, was measured by collecting 0.1 g of the positive electrode active material powder, and then filtering the collected sample under the condition of immersing the collected sample in deionized water at 25 °C for 1 hour, and measuring the filtrate using an inductively coupled plasma emission spectrometer (ICP-OES(PerkinElmer, Optima7300DV)).

The measurement results are shown in Table 1 below.

Table 1

| | Particle shape | Ni cont ent [mol %] | BET spec ific surf ace area [m$^2$/g ] | Ni cont ent [mol %] $\times$ BET spec ific surf ace area [m$^2$/g ] | Al weig ht [ppm ] | W weig ht [ppm ] | Al + W weig ht [ppm ] |
|---|---|---|---|---|---|---|---|
| Example 1 | Single particle | 60 | 0.77 | 46.2 | 1400 | 2800 | 4200 |
| Example 2 | Single particle | 60 | 0.82 | 49.2 | 1400 | 2800 | 4200 |
| Example 3 | Single particle | 60 | 0.84 | 50.4 | 1400 | 2800 | 4200 |
| Example 4 | Single particle | 60 | 0.88 | 52.8 | 1400 | 2800 | 4200 |
| Example 5 | Single particle | 65 | 0.75 | 48.8 | 1400 | 2800 | 4200 |
| Example 6 | Single particle | 70 | 0.79 | 55.3 | 1400 | 2800 | 4200 |
| Comparative Example 1 | Single particle | 60 | 0.60 | 36.0 | 1400 | 2800 | 4200 |
| Comparative Example 2 | Single particle | 60 | 0.64 | 38.4 | 1400 | 2800 | 4200 |
| Comparative Example 3 | Single particle | 60 | 0.70 | 42.0 | 1400 | 2800 | 4200 |
| Comparative Example 4 | Single particle | 60 | 0.72 | 43.2 | 1000 | 2300 | 3300 |
| Comparative Example 5 | Single particle | 60 | 0.97 | 58.2 | 1400 | 2800 | 4200 |
| Comparative Example 6 | Single particle | 86 | 0.80 | 66.4 | 1400 | 2800 | 4200 |
| Comparative Example 7 | Secondary particle | 60 | 0.77 | 46.2 | 1400 | 2800 | 4200 |

### Experimental Example 2: Observation of positive electrode active material surface

SEM images of the positive electrode active material powder respectively prepared in Examples 1 to 6 and Comparative Examples 1 to 7 were obtained using a scanning electron microscope device.

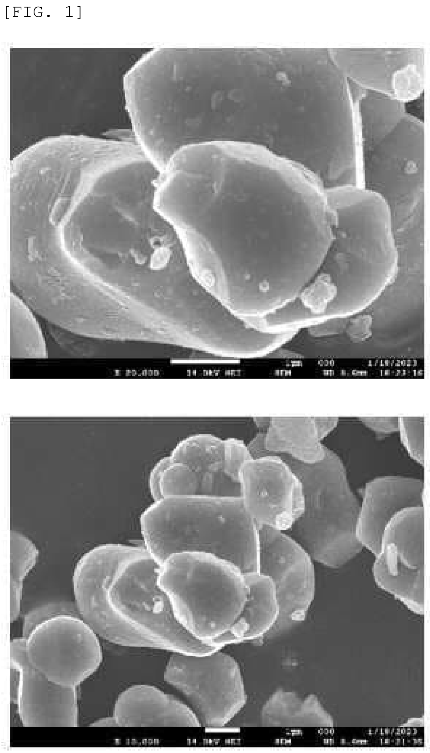

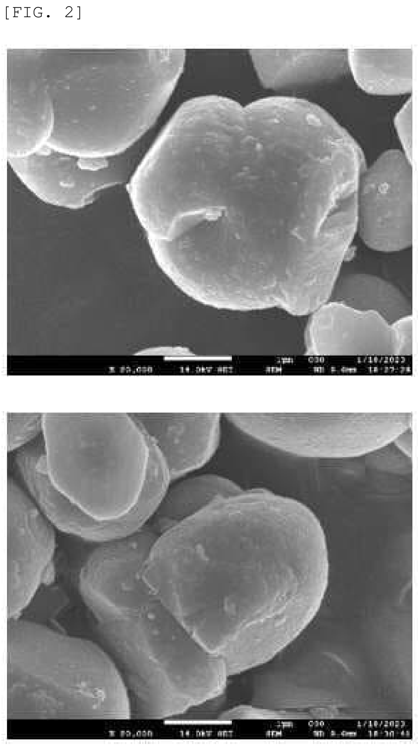

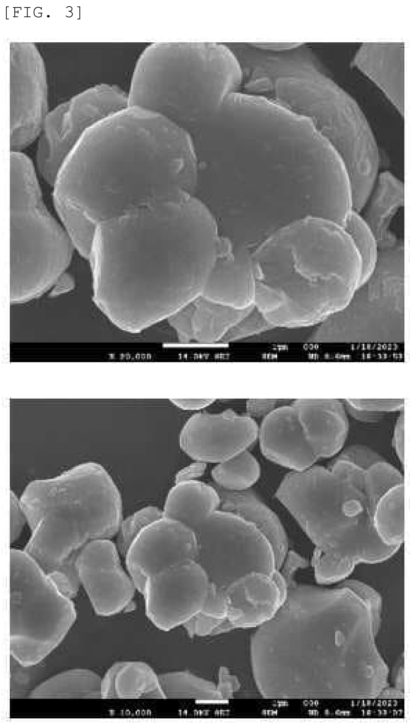

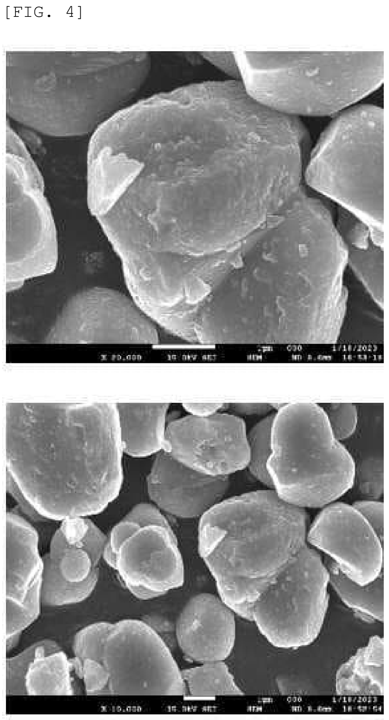

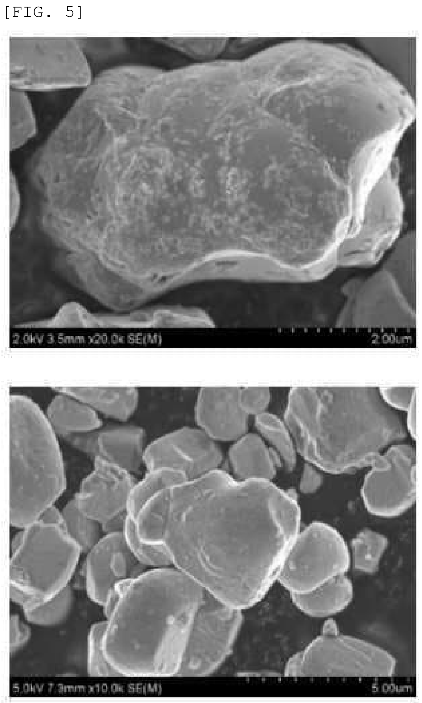

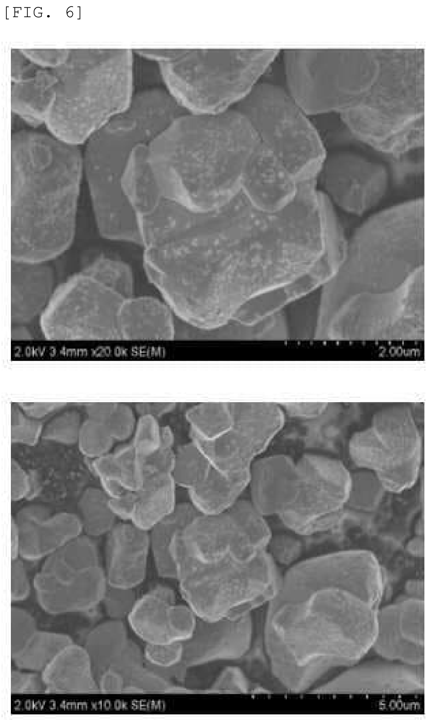

FIGS. 1 to 6 are SEM images of surfaces of the positive electrode active materials prepared in Examples 1 to 6.

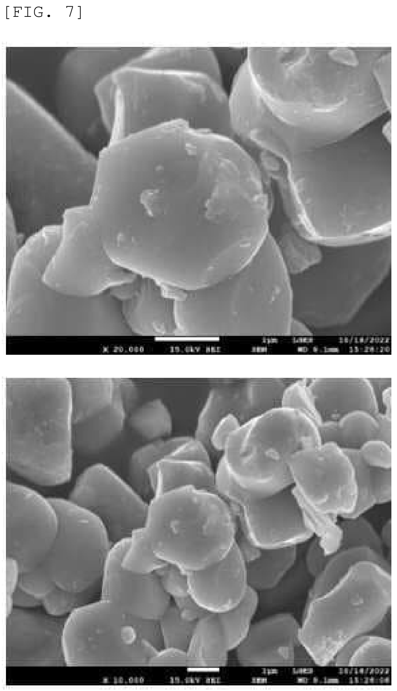

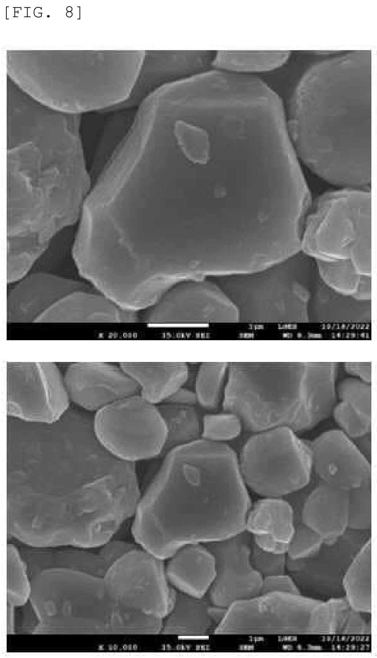

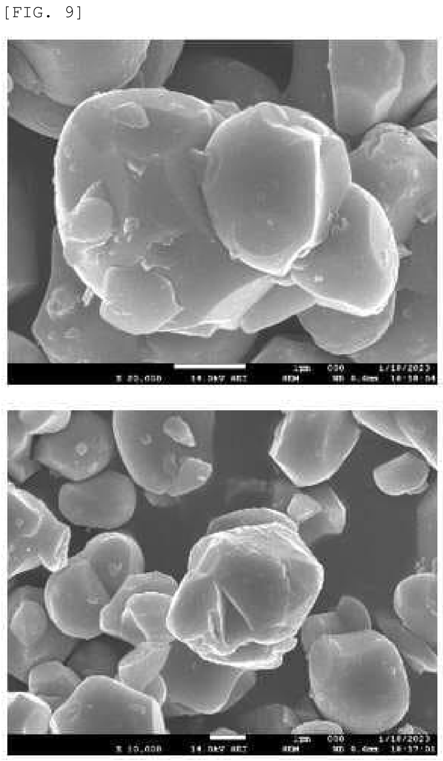

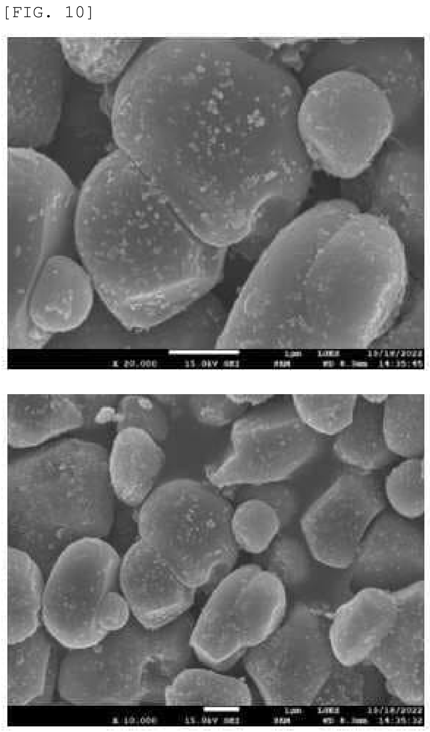

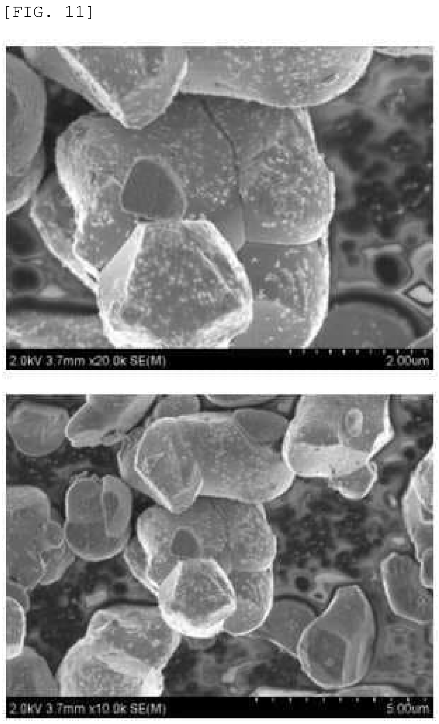

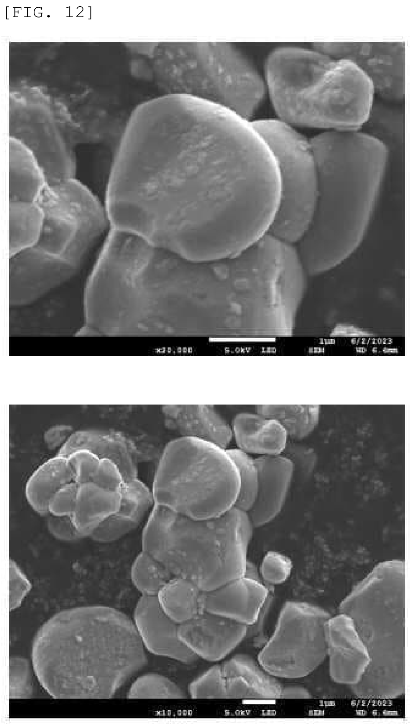

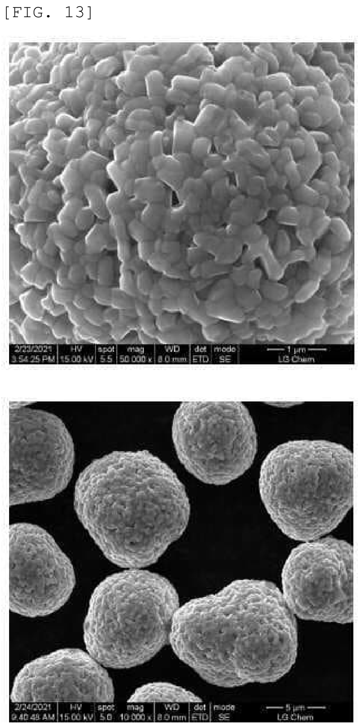

FIGS. 7 to 13 are SEM images of surfaces of the positive electrode active materials prepared in Comparative Examples 1 to 7.

## Experimental Example 3: Tap density of positive electrode active material

The tap density of each of the positive electrode active materials prepared in Examples 1 to 6 and Comparative Examples 1 to 7 was measured using a tap density tester (Micromeritics GeoPyc 1365). Specifically, a 45 cc container was filled with 5 g of the positive electrode active material prepared in each of Examples 1 to 6 and Comparative Examples 1 to 7, and was vibrated until a force of 108 N was horizontally applied to measure the tap density. The measurement results are shown in Table 2 below.

Table 2

|  | Tap density [g/cc] |
| --- | --- |
| Example 1 | 2.31 |
| Example 2 | 2.24 |
| Example 3 | 2.21 |
| Example 4 | 2.21 |
| Example 5 | 2.29 |
| Example 6 | 2.24 |
| Comparative Example 1 | 2.12 |
| Comparative Example 2 | 2.03 |
| Comparative Example 3 | 2.05 |
| Comparative Example 4 | 2.18 |
| Comparative Example 5 | 2.09 |
| Comparative Example 6 | 2.18 |
| Comparative Example 7 | 1.92 |

Based on the data in Table 2 above, it can be confirmed that the positive electrode active materials of Examples 1 to 6 have a higher tap density than the positive electrode active materials of Comparative Examples 1 to 7.

## Experimental Example 4: Evaluation of high-temperature cycle properties

High-temperature lifespan properties were analyzed for lithium secondary battery half-cells manufactured as follows using the positive electrode active materials prepared in Examples 1 to 6 and Comparative Examples 1 to 11, respectively.

## <Manufacturing of lithium secondary battery>

The positive electrode active material prepared in each of Examples 1 to 6 and Comparative Examples 1 to 11, a carbon black conductive material, and a PVDF binder were mixed at a weight ratio of 95 : 2 : 3 in N-methylpyrrolidone to prepare a positive electrode slurry. The positive electrode slurry was applied on one surface of an aluminum current collector, dried at 60 °C, and then roll-pressed to manufacture a positive electrode.

A lithium metal was used as a negative electrode.

A separator was interposed between the positive electrode and the negative electrode manufactured by the method described above to manufacture an electrode assembly, and the electrode assembly was placed inside a battery case, and then an electrolyte solution was injected into the case to manufacture a battery cell. The electrolyte solution was prepared by dissolving $LiPF_6$ with a 0.6 M concentration in a mixed organic solvent in which ethylene carbonate (EC): dimethyl carbonate (DMC): ethyl methyl carbonate (EMC) were mixed at a volume ratio of 1 : 2 : 1, and then adding 2 wt% of vinylene carbonate (VC) thereto.

Specifically, high-temperature lifespan properties were evaluated by charging the battery cell to 4.35 V at 0.5 C in a CC-CV mode at 45 °C and discharging the same to 2.5 V at 1.0 C for 300 times, after setting the above discharge/charge was set to 1 time of charge/discharge, and then measuring a capacity retention rate and a resistance increase rate. The measurement results are shown in Table 3 below.

Table 3

| | Capacity retention rate (%) | Resistance increase rate (%) |
|---|---|---|
| Example 1 | 80.7 | 48.1 |
| Example 2 | 81.3 | 53.3 |
| Example 3 | 86.0 | 53.5 |
| Example 4 | 83.0 | 55.4 |
| Example 5 | 82.0 | 40.5 |
| Example 6 | 82.8 | 42.5 |
| Comparative Example 1 | 26.4 | 147.3 |
| Comparative Example 2 | 46.4 | 132.6 |
| Comparative Example 3 | 60.8 | 103.2 |
| Comparative Example 4 | 51.6 | 121.0 |
| Comparative Example 5 | 63.2 | 96.5 |
| Comparative Example 6 | 16.2 | 107.3 |
| Comparative Example 7 | 70.8 | 85.8 |
| Comparative Example 8 | 72.4 | 145.0 |
| Comparative Example 9 | 18.3 | 190.2 |
| Comparative Example 10 | 74.4 | 106.2 |
| Comparative Example 11 | 17.9 | 195.5 |

Through Table 3 above, it can be confirmed that the lithium secondary batteries to which the positive electrode active materials of Examples 1 to 6 are used have excellent lifespan properties under high temperature and high voltage compared to the lithium secondary batteries to which the positive electrode active materials of Comparative Examples 1 to 11 are used.

**Claims**

1. A positive electrode active material comprising:

a lithium composite transition metal oxide in the form of a single particle composed of one single nodule and/or in the form of a pseudo-single particle, wherein the pseudo-single particle is a composite of 30 or less nodules; and a coating layer formed on a surface of the lithium composite transition metal oxide, wherein:

the coating layer contains aluminum (Al) and tungsten (W), and the positive electrode active material satisfies Equation 1 below:

$$[Equation\ 1]$$

$$45 \leq X \times X' \leq 56$$

wherein, X is acontent of nickel among all metals except for lithium in the lithium composite transition metal oxide (unit: mol%), and X' is a BET specific surface area of the positive electrode active material (unit: $m^2/g$).

2. The positive electrode active material of claim 1, wherein the lithium composite transition metal oxide has a nickel content of 50 mol% to 80 mol% among all metals except for lithium.

3. The positive electrode active material of claim 1, wherein the positive electrode active material has a BET specific surface area of 0.70 $m^2$/g to 0.90 $m^2$/g.

4. The positive electrode active material of claim 1, wherein the aluminum (Al) is included in an amount of 1000 ppm to 2000 ppm based on the total weight of the positive electrode active material.

5. The positive electrode active material of claim 1, wherein the tungsten (W) is included in an amount of 2000 ppm to 3000 ppm based on the total weight of the positive electrode active material.

6. The positive electrode active material of claim 1, wherein a total amount of the aluminum (Al) and the tungsten (W) included in the positive electrode active material is from 3500 ppm to 5000 ppm based on a total weight of the positive electrode active material.

7. The positive electrode active material of claim 1, wherein the lithium composite transition metal oxide has a composition represented by Formula 1 below:

$$[\text{Formula 1}] \qquad Li_aNi_bCo_cM^1_dM^2_eO_2$$

wherein, $M^1$ is at least one selected from the group consisting of Mn and Al, $M^2$ is at least one selected from the group consisting of Ti, Mg, Zr, Y, Ba, Ca, Sr, W, Ta, Nb, and Mo, and $1.0 \leq a \leq 1.5$, $0.5 \leq b \leq 0.8$, $0 < c < 0.5$, $0 < d < 0.5$, and $0 \leq e \leq 0.2$.

8. The positive electrode active material of claim 1, wherein the positive electrode active material has a $D_{50}$ of 3.0 $\mu$m to 5.0 $\mu$m.

9. The positive electrode active material of claim 1, wherein the positive electrode active material has a tap density of 2.20 g/cc or greater.

10. The positive electrode active material of claim 1, wherein the positive electrode active material further comprises at least one of Zr, Y, Ti, or Sr.

11. The positive electrode active material of claim 10, wherein the positive electrode active material further comprises at least one of Zr in an amount of 2000 ppm to 3000 ppm, Y in an amount of 1000 ppm to 1500 ppm, Ti in an amount of 1000 ppm to 1500 ppm, or Sr in an amount of 300 ppm to 1000 ppm based on a total weight of the positive electrode active material.

12. A positive electrode comprising the positive electrode active material of any one of claims 1 to 11.

13. A lithium secondary battery comprising the positive electrode of claim 12.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

[FIG. 13]

## INTERNATIONAL SEARCH REPORT

| International application No. |
|---|
| **PCT/KR2024/009143** |

**A.    CLASSIFICATION OF SUBJECT MATTER**

**H01M 4/36**(2006.01)i; **H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/36(2006.01); C01G 53/00(2006.01); H01M 10/052(2010.01); H01M 10/0525(2010.01); H01M 4/131(2010.01); H01M 4/48(2010.01); H01M 4/505(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질 (cathode active material), 단입자 (single particle), 코팅 (coating), 알루미늄 (aluminum, Al), 텅스텐 (tungsten, W), 비표면적 (BET, Brunauer, Emmett, Teller)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2019-0051862 A (LG CHEM, LTD.) 15 May 2019 (2019-05-15) See abstract; paragraphs [0052]-[0055], [0084], [0087], [0091], [0142], [0151], [0152], [0161] and [0164]; and claims 1 and 9. | 1-13 |
| A | KR 10-2008-0003729 A (SONY CORPORATION) 08 January 2008 (2008-01-08) See abstract; and claims 1-7. | 1-13 |
| A | JP 2021-048070 A (SUMITOMO METAL MINING CO., LTD.) 25 March 2021 (2021-03-25) See abstract; and claims 1-10. | 1-13 |
| A | KR 10-2019-0022396 A (IUCF-HYU (INDUSTRY-UNIVERSITY COOPERATION FOUNDATION HANYANG UNIVERSITY)) 06 March 2019 (2019-03-06) See abstract; and claims 1-11. | 1-13 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 October 2024** | **07 October 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/009143** |

| C. | DOCUMENTS CONSIDERED TO BE RELEVANT | |
| --- | --- | --- |
| Category* | Citation of document, with indication, where appropriate, of the relevant passages | Relevant to claim No. |
| A | ZHANG, Z. et al. A low cost single-crystalline LiNi0.60Co0.10Mn0.30O2 layered cathode enables remarkable cycling performance of lithium-ion batteries at elevated temperature. Journal of Power Sources. 2021, vol. 503, thesis no. 230028, pp. 1-11.<br>See abstract. | 1-13 |

Form PCT/ISA/210 (second sheet) (July 2022)

**INTERNATIONAL SEARCH REPORT**
Information on patent family members

International application No.

**PCT/KR2024/009143**

| Patent document cited in search report | | | Publication date (day/month/year) | Patent family member(s) | | | Publication date (day/month/year) |
|---|---|---|---|---|---|---|---|
| KR | 10-2019-0051862 | A | 15 May 2019 | CN | 110574194 | A | 13 December 2019 |
| | | | | CN | 110574194 | B | 03 June 2022 |
| | | | | CN | 110582875 | A | 17 December 2019 |
| | | | | CN | 110582875 | B | 21 April 2023 |
| | | | | CN | 111213264 | A | 29 May 2020 |
| | | | | CN | 111213264 | B | 24 June 2022 |
| | | | | EP | 3609002 | A2 | 12 February 2020 |
| | | | | EP | 3609003 | A1 | 12 February 2020 |
| | | | | EP | 3609003 | B1 | 12 June 2024 |
| | | | | EP | 3683873 | A2 | 22 July 2020 |
| | | | | EP | 3683873 | B1 | 12 April 2023 |
| | | | | JP | 2020-525990 | A | 27 August 2020 |
| | | | | JP | 2020-532842 | A | 12 November 2020 |
| | | | | JP | 2020-537324 | A | 17 December 2020 |
| | | | | JP | 7045549 | B2 | 01 April 2022 |
| | | | | JP | 7045586 | B2 | 01 April 2022 |
| | | | | JP | 7047217 | B2 | 05 April 2022 |
| | | | | KR | 10-2019-0051863 | A | 15 May 2019 |
| | | | | KR | 10-2019-0051864 | A | 15 May 2019 |
| | | | | KR | 10-2264736 | B1 | 15 June 2021 |
| | | | | KR | 10-2460353 | B1 | 31 October 2022 |
| | | | | KR | 10-2656222 | B1 | 11 April 2024 |
| | | | | US | 11258056 | B2 | 22 February 2022 |
| | | | | US | 11532807 | B2 | 20 December 2022 |
| | | | | US | 2020-0083524 | A1 | 12 March 2020 |
| | | | | US | 2020-0119341 | A1 | 16 April 2020 |
| | | | | US | 2020-0343536 | A1 | 29 October 2020 |
| | | | | WO | 2019-088805 | A2 | 09 May 2019 |
| | | | | WO | 2019-088805 | A3 | 20 June 2019 |
| | | | | WO | 2019-088806 | A1 | 09 May 2019 |
| | | | | WO | 2019-088807 | A2 | 09 May 2019 |
| | | | | WO | 2019-088807 | A3 | 20 June 2019 |
| KR | 10-2008-0003729 | A | 08 January 2008 | JP | 2008-016232 | A | 24 January 2008 |
| | | | | JP | 2008-016233 | A | 24 January 2008 |
| | | | | JP | 2008-016234 | A | 24 January 2008 |
| | | | | JP | 2008-016235 | A | 24 January 2008 |
| | | | | JP | 2008-016236 | A | 24 January 2008 |
| | | | | JP | 2008-016243 | A | 24 January 2008 |
| | | | | JP | 2008-016244 | A | 24 January 2008 |
| | | | | JP | 2008-041570 | A | 21 February 2008 |
| | | | | JP | 5028886 | B2 | 19 September 2012 |
| | | | | JP | 5034366 | B2 | 26 September 2012 |
| | | | | JP | 5082306 | B2 | 28 November 2012 |
| | | | | JP | 5082307 | B2 | 28 November 2012 |
| | | | | JP | 5082308 | B2 | 28 November 2012 |
| | | | | JP | 5092292 | B2 | 05 December 2012 |
| | | | | KR | 10-1415590 | B1 | 06 August 2014 |
| | | | | US | 2008-0131778 | A1 | 05 June 2008 |
| | | | | US | 2015-0099181 | A1 | 09 April 2015 |
| | | | | US | 8911903 | B2 | 16 December 2014 |

Form PCT/ISA/210 (patent family annex) (July 2022)

**INTERNATIONAL SEARCH REPORT**
Information on patent family members

International application No.

**PCT/KR2024/009143**

| Patent document cited in search report | | | Publication date (day/month/year) | Patent family member(s) | | | Publication date (day/month/year) |
|---|---|---|---|---|---|---|---|
| JP | 2021-048070 | A | 25 March 2021 | JP | 2022-048070 | A5 | 28 September 2022 |
| | | | | JP | 7347061 | B2 | 20 September 2023 |
| KR | 10-2019-0022396 | A | 06 March 2019 | KR | 10-2138691 | B1 | 28 July 2020 |
| | | | | WO | 2019-039893 | A1 | 28 February 2019 |

Form PCT/ISA/210 (patent family annex) (July 2022)